# EUROPÄISCHE PATENTSCHRIFT

(11) **EP 3 711 133 B1**
(45) Veröffentlichungstag und Bekanntmachung des Hinweises auf die Patenterteilung: **12.06.2024**
(21) Anmeldenummer: 18803973.9
(22) Anmeldetag: 15.11.2018
(51) Int. Cl.: H02J 3/32, H02J 3/38, H02J 9/06, H02J 11/00, H02M 1/36

(54) **VERFAHREN ZUM SCHWARZSTART EINER ENERGIEVERSORGUNGSEINRICHTUNG, BIDIREKTIONALER WECHSELRICHTER UND ENERGIEVERSORGUNGSEINRICHTUNG MIT EINEM BIDIREKTIONALEN WECHSELRICHTER**
METHOD FOR BLACK STARTING A POWER SUPPLY INSTALLATION, BIDIRECTIONAL INVERTER, AND POWER SUPPLY INSTALLATION WITH A BIDIRECTIONAL INVERTER
PROCÉDÉ DE DÉMARRAGE AUTONOME D'UN DISPOSITIF D'ALIMENTATION EN ÉNERGIE, ONDULEUR BIDIRECTIONNEL ET DISPOSITIF D'ALIMENTATION EN ÉNERGIE DOTÉ D'UN ONDULEUR BIDIRECTIONNEL

(30) Priorität: 17.11.2017 DE 102017127081
(43) Veröffentlichungstag der Anmeldung: 23.09.2020
(73) Patentinhaber: SMA Solar Technology AG, 34266 Niestetal (DE)
(72) Erfinder: ALLERT, Claus, 34260 Kaufungen (DE)
(86) Internationale Anmeldenummer: PCT/EP2018/081465
(87) Internationale Veröffentlichungsnummer: WO 2019/096951

(56) Entgegenhaltungen:
- EP-A1- 2 645 522
- WO-A1-2016/134173
- DE-A1- 10 109 796
- US-A1- 2012 126 623
- US-A1- 2017 005 564

## Beschreibung

Die Erfindung bezieht sich auf ein Verfahren zum Schwarzstart einer Energieversorgungseinrichtung umfassend einen bidirektionalen Wechselrichter und eine DC-seitig an den Wechselrichter angeschlossene Batterie.

Die Erfindung betrifft auch einen zur Verwendung bei dem Verfahren geeigneten bidirektionalen Wechselrichter. Der bidirektionale Wechselrichter umfasst eine Steuereinrichtung und Schnittstellen zum DC-seitigen Anschluss einer Batterie und zum AC-seitigen Anschluss eines Netzes. Die Schnittstellen zum DC-seitigen Anschluss der Batterie umfassen mindestens eine Versorgungs-Schnittstelle für die Anbindung von zwei Batteriepolen an den Wechselrichter.

Die Erfindung bezieht sich auch auf eine Backup-Einrichtung für eine Energieversorgungseinrichtung, welche zur Verwendung bei dem Verfahren geeignet ist.

Die Erfindung betrifft auch eine zur Verwendung bei dem Verfahren geeignete Energieversorgungseinrichtung. Die Energieversorgungseinrichtung umfasst mindestens einen bidirektionalen Wechselrichter mit einer AC-seitigen Schnittstelle zum Anschluss eines Netzes und mindestens eine DC-seitig an den Wechselrichter angeschlossene Batterie.

Derartige Energieversorgungseinrichtungen können beispielsweise elektrische Energie eines öffentlichen Netzes und/oder von Solarmodulen und/oder von Windrädern in der Batterie zwischenspeichern. Der Wechselrichter wandelt Gleichspannung in Wechselspannung um und umgekehrt. Zum Laden und Entladen der Batterie transportiert er elektrische Energie in beide Richtungen, also beispielsweise vom AC-seitigen Anschluss zur Batterie und umgekehrt.

Von einem Schwarzstart einer Energieversorgungseinrichtung bzw. eines Kraftwerks spricht man dann, wenn die Energieversorgungseinrichtung ohne externe Energiezufuhr gestartet wird.

Eine derartige Situation kann beispielsweise bei einer Energieversorgungseinrichtung einer Hausanlage eintreten, die eine Solaranlage umfasst und zusätzlich für einen Notstrombetrieb ausgebildet ist. Die Energieversorgungseinrichtung schaltet sich beispielsweise ab bzw. in einen Ruhemodus (Stand-by-Modus), wenn die Batterie eine untere Ladegrenze erreicht hat und gleichzeitig keine Aufladung der Batterie durch die Solaranlage zu erwarten ist, z.B. nachts.

Die WO2016134173 A1 offenbart ein Verfahren und eine Vorrichtung zum Steuern von Leistungskonditionierern in einer verteilten Ressourceninsel. In einer Ausführungsform umfasst das Verfahren das Vergleichen eines Eingangs des Stromrichters mit einem Eingangsschwellenwert an einem Stromrichter, der in einem abgeschalteten Zustand arbeitet, wobei der Stromrichter mit einem inselförmigen Netz gekoppelt ist. Sie umfasst ferner den Betrieb des Leistungskonditionierers, wenn die Eingabe den Eingabeschwellenwert überschreitet, in einem Soft-Grid-Modus, um eine berührungssichere Wechselspannung zu erzeugen, die an das inselförmige Netz gekoppelt ist. Das Verfahren umfasst das Vergleichen, durch den Wechselrichter, einer Impedanz des inselförmigen Gitters mit einem Gitterimpedanzbereich; das Vergleichen, durch den Wechselrichter, einer Lastanforderung des Wechselrichters mit einem Aktivierungsschwellenwert; und das Aktivieren des Wechselrichters, wenn die Impedanz innerhalb des Gitterimpedanzbereichs liegt und die Lastanforderung den Aktivierungsschwellenwert überschreitet, um nahe seiner nominalen Ausgangsspannung zu arbeiten.

Aus der DE 103 20 087 A1 ist ein Verfahren zum Betreiben eines Windparks und ein Windpark mit einer zentralen Vorrichtung zur Steuerung des Windparks bekannt. Um den Windpark schwarzstartfähig zu machen, umfasst dieser eine permanent erregte Windenergieanlage mit motorloser Windrichtungsnachführung. Diese permanent erregte Windenergieanlage kann auch dann angefahren werden, wenn keine Energie von extern bezogen werden kann.

Der Erfindung liegt die Aufgabe zugrunde, ein Verfahren der eingangs genannten Art und eine Energieversorgungseinrichtung der eingangs genannten Art anzugeben, mit welchem ein Schwarzstart der Energieversorgungseinrichtung ermöglicht ist. Eine weitere Aufgabe der Erfindung ist es, einen bidirektionalen Wechselrichter und eine separate Backup-Einrichtung der eingangs genannten Art anzugeben, welche als Bestandteile der Energieversorgungseinrichtung verwendbar sind.

Erfindungsgemäß wird die Aufgabe durch ein Verfahren mit den Schritten des unabhängigen Anspruchs 1, einen Bidirektionaler Wechselrichter mit den technischen Merkmalen des unabhängigen Anspruchs 7, eine Backup-Einrichtung mit den technischen Merkmalen des unabhängigen Anspruchs 12 und eine Energieversorgungseinrichtung mit den technischen Merkmalen des unabhängigen Anspruchs 14 gelöst.

Das Verfahren ermöglicht insbesondere einen Schwarzstart einer Energieversorgungseinrichtung der eingangs genannten Art aus einem Zustand, in welchem sich der Wechselrichter und die Batterie in einem abgeschalteten Zustand oder in einem Stand-by-Modus befinden.

Bei dem erfindungsgemäßen Verfahren zum Schwarzstart wird mit der Energie aus einer Hilfsbatterie der Energieversorgungseinrichtung die Batterie in einen Betriebszustand versetzt. Dies erfolgt durch Bereitstellung einer Spannung an einer Steuerleitung der Batterie. Die Steuerleitung kann auch mit Enable-Leitung bezeichnet werden. Die Spannung wird dabei derart gewählt, dass sie einem Freigabesignal der Batterie entspricht. Das Freigabesignal kann auch mit Enable-Signal oder Aktiv-Signal bezeichnet werden und kann einem konstanten Spannungswert entsprechen, der abhängig von der Bauart der Batterie ist. Mit anderen Worten, die Batterie wechselt von dem abgeschalteten Zustand oder Stand-by-Modus in einen Betriebszustand, wenn das Freigabesignal an der Steuerleitung anliegt. Aus Sicherheitsgründen kann die Batterie nach einer Aktivierung wieder abgeschaltet werden, wenn innerhalb einer definierten Zeit keine Kommunikationsverbindung mit dem Wechselrichter aufgebaut werden kann. Hierdurch wird verhindert, dass die Batterie einfach entladen wird, wenn das Kommunikationskabel getrennt ist. Wird das Freigabesignal weggenommen, kann dies zu einer Abschaltung der Batterie führen, insbesondere wenn an keiner weiteren Steuerleitung der Batterie ein Freigabesignal anliegt. Erfindungsgemäß wird somit vorgeschlagen, die Batterie mit einer Spannung an einer Enable-Leitung der Batterie auf zu starten. Dies hat den Vorteil, dass die Inbetriebsetzung der Batterie mittels der Bereitstellung der Spannung wenig Energie kostet und die Hilfsbatterie keinen hohen Belastungen ausgesetzt ist. Anschließend wird erfindungsgemäß nach der Beaufschlagung der Steuerleitung durch die von der Hilfsbatterie bereitgestellte Spannung der Wechselrichter in einen Betriebszustand versetzt.

Die Aktivierungsvorrichtung zur Bereitstellung des Freigabesignals kann automatisch und/oder ferngesteuert und/oder manuell betätigbar sein. Die Aktivierungsvorrichtung kann einen oder mehrere Schaltstellungen zur manuellen Betätigung aufweisen, wobei mindestens eine Schaltstellung für den Schwarzstart ausgebildet ist. Bei der Hilfsbatterie kann es sich um eine wieder aufladbare Batterie handeln. Die Aktivierungsvorrichtung kann mehr als eine Hilfsbatterie umfassen. Auch kann die Energieversorgungseinrichtung mehrere derartige Aktivierungsvorrichtungen umfassen.

Vorteilhafte Ausgestaltungen der Erfindung sind in der nachfolgenden Beschreibung und den Unteransprüchen angegeben, deren Merkmale einzeln und in beliebiger Kombination miteinander angewendet werden können, aber immer ohne vom Umfang der Erfindung abzuweichen, wie er durch die beigefügten Ansprüche definiert ist.

Eine weitere vorteilhafte Ausgestaltung der Erfindung kann vorsehen, dass in dem weiteren Verfahrensschritt die von der Aktivierungseinrichtung in einen Betriebszustand versetzte Batterie eine DC-Versorgungsspannung dem bidirektionalen Wechselrichter zur Verfügung stellt, welche den bidirektionalen Wechselrichter in einen Betriebszustand versetzt.

Diese vorteilhafte Ausgestaltung der Erfindung ermöglicht einen besonders sichere Betriebsführung der Energieversorgungseinrichtung beim Schwarzstart, da das Aufstarten des bidirektionalen Wechselrichters nach einem Aufstarten der Batterie durchgeführt wird. Im Rahmen dieser Erfindung sei mit AC eine Wechselspannung und mit DC eine Gleichspannung abgekürzt. Auch sei mit Betriebszustand des bidirektionalen Wechselrichters oder der Batterie ein Betriebszustand bezeichnet, wobei der bidirektionale Wechselrichter und die Batterie mehrere Betriebszustände aufweisen können. Der bidirektionale Wechselrichter kann im Folgen auch nur mit Wechselrichter bezeichnet werden.

Gemäß dieser Ausgestaltung der Erfindung wird vorgeschlagen, den bidirektionalen Wechselrichter mittels der sich bereits in einem Betriebszustand befindlichen Batterie in einen Betriebszustand zu versetzen. Die Batterie ist DC-seitig an dem bidirektionalen Wechselrichter angeschlossen. Beispielsweise mittels Versorgungsleitungen, die die beiden Pole der Batterie mit einer DC-Versorgungsschnittstelle des Wechselrichters verbinden und beispielsweise in einem gemeinsamen Kabel integriert sind. Im Zustand der Abschaltung oder des Stand-by-Betriebs des Wechselrichters und der Batterie können die Versorgungsleitungen mittels entsprechender Schalter unterbrochen oder abgetrennt sein. Über diese Versorgungsleitungen kann die Batterie im Betriebszustand dem Wechselrichter eine DC-Versorgungsspannung zur Verfügung stellen. Die Batterie kann ein Batterie-Management-System und eine von dem Batterie-Management-System ansteuerbare Schutzschaltung mit den entsprechenden Schaltern umfassen. Die Batterie kann in dem Betriebszustand, in welchem sie sich nach Beaufschlagung der Steuerleitung mit dem Freigabesignal befindet, mittels dem Batterie-Management-System die Schutzschaltung derart ansteuern, dass diese die entsprechenden Schalter in den Versorgungsleitungen schließt, um eine leitende Verbindung zum Wechselrichter herzustellen und dem Wechselrichter eine DC-Versorgungsspannung über die Versorgungsleitungen zur Verfügung stellen. Der Spannungswert der DC-Versorgungsspannung ist dabei derart gewählt, dass der Wechselrichter in einen Betriebszustand versetzt wird. Der Betriebszustand kann beispielsweise den Betrieb mindestens einer Steuerbaugruppe des Wechselrichters umfassen, wobei die mindestens eine Steuerbaugruppe jeweils einen Microcontroller umfassen kann. Die Steuerbaugruppe kann im Rahmen dieser Erfindung auch mit Steuereinrichtung oder Steuer/Regel-Einrichtung bezeichnet werden. Eine Taktung der Leistungshalbleiterschalter der Wechselrichter-Brücke des Wechselrichters kann zu einem späteren Zeitpunkt des Aufstart-Prozesses stattfinden.

Es kann auch als vorteilhaft angesehen werden, dass die Energieversorgungseinrichtung eine separate oder eine vom bidirektionalen Wechselrichter umfasste Backup-Einrichtung aufweist, und im ersten Fall zusätzlich die separate Backup-Einrichtung, insbesondere vom bidirektionalen Wechselrichter, mit einer Versorgungsspannung versorgt und in einen Betriebszustand versetzt wird.

Gemäß dieser Ausgestaltung der Erfindung kann die Energieversorgungseinrichtung eine wechselrichterinterne oder separate Backup-Einrichtung umfassen, wobei im letzteren Fall der bidirektionale Wechselrichter in dem Betriebszustand die separate Backup-Einheit in einen Betriebszustand versetzen kann. Hierzu kann der bidirektionale Wechselrichter eine vom Wechselrichter zur Backup-Einrichtung führende Steuerleitung mit einem Freigabesignal beaufschlagen und Versorgungsleitungen der Backup-Einrichtung mit einer DC-Versorgungsspannung beaufschlagen. Die Reihenfolge von Bereitstellung des Freigabesignals und DC-Versorgungsspannung kann hierbei unwesentlich sein. Die Backup-Einrichtung könnte auch derart ausgebildet sein, dass sie durch die reine Bereitstellung der DC-Versorgungsspannung in einen Betriebszustand versetzt wird und eine separate Enable-Leitung nicht vorhanden ist.

Alternativ könnte die separate Backup-Einrichtung auch direkt von der Batterie in analoger Weise in einen Betriebszustand versetzt werden.

Die Backup-Einrichtung kann beispielsweise Sensoren und/oder Schütze umfassen oder ansteuern. Die Backup-Einrichtung kann ein Steuermodul aufweisen, wobei das Steuermodul einen Microcontroller umfassen kann. Das Steuermodul kann auch mit Steuereinrichtung bezeichnet werden. Die Backup-Einrichtung kann dazu ausgebildet sein, im Zusammenspiel mit dem bidirektionalen Wechselrichter bei einem Ausfall eines öffentlichen Netzes einen Notstrombetrieb in einem lokalen Netz zu ermöglichen. Hierzu kann die Backup-Einrichtungen unter anderem dazu ausgebildet sein, einen Ausfall des öffentlichen Netzes zu detektieren und das lokale, an den Wechselrichter AC-seitig angeschlossene Netz von dem öffentlichen Netz zu trennen.

Eine weitere vorteilhafte Ausgestaltung der Erfindung kann vorsehen, dass der bidirektionale Wechselrichter im Betriebszustand an einer Steuerleitung der Batterie die Bereitstellung der zunächst von der Aktivierungsvorrichtung bereitgestellten Spannung übernimmt und die Aktivierungsvorrichtung bezüglich der Batterie in einen Anfangszustand versetzt wird.

Diese Ausgestaltung der Erfindung verhindert eine vollständige Entladung der Hilfsbatterie und somit eine ungewollte Wegnahme des Freigabesignals an der Steuerleitung der Batterie.

Die Rücksetzung der Aktivierungsvorrichtung bezüglich der Batterie in einen Anfangszustand bezieht sich auf die Möglichkeit, durch eine Betätigung der Aktivierungsvorrichtung einen erneuten Schwarzstart der Energieversorgungseinrichtung zu starten. Die Rücksetzung kann eine Wiederaufladung der Hilfsbatterie umfassen.

Die Aktivierungsvorrichtung kann vom bidirektionalen Wechselrichter umfasst sein. Beispielsweise kann ein Betätigungsmittel der Aktivierungsvorrichtung außen an einem Gehäuse des Wechselrichters angeordnet sein. Die Hilfsbatterie kann beispielsweise in einer Steuerbaugruppe des Wechselrichters integriert sein. Durch ein Betätigen der Aktivierungsvorrichtung für einen Schwarzstart kann ein erster Schalter auf der Steuerbaugruppe geschlossen werden, so dass eine von der Hilfsbatterie bereitgestellte Spannung zu einer Schnittstelle für die Steuerleitung der Batterie durchgeschaltet wird. Bei einer Übernahme der Bereitstellung der Spannung durch den Wechselrichter kann ein weiterer Schalter auf einer weiteren Leiterbahn der Steuerbaugruppe geschlossen werden, so dass aus einer internen Spannungsquelle der Steuerbaugruppe ein Freigabesignal zu einer Schnittstelle für eine Steuerleitung der Batterie durchgeschaltet wird und der erste Schalter zur Rücksetzung der Aktivierungsvorrichtung von der Steuerbaugruppe wieder geöffnet wird. Die interne Spannungsquelle der Steuerbaugruppe wird durch die von der bereits aufgestartete Batterie bereitgestellte DC-Versorgungsspannung gespeist. Die Steuerbaugruppe kann im Rahmen dieser Erfindung auch mit Steuereinrichtung oder Steuer/Regel-Einrichtung bezeichnet werden.

Eine weitere vorteilhafte Ausgestaltung der Erfindung kann vorsehen, dass ein Handshake-Protokoll zwischen der Batterie und dem bidirektionalen Wechselrichter gestartet wird zum Aufbau einer Kommunikation zwischen den beiden.

Unter einem Handshake-Protokoll sei ein Austausch von Daten verstanden, mit welchem die Geräte für einen Kommunikationsaufbau Daten die Verbindung und/oder die Geräte betreffend austauschen. Der Datenaustausch kann leitungsgebunden oder drahtlos erfolgen. Beispielsweise über eine Feldbus-Verbindung zwischen dem bidirektionalen Wechselrichter und der Batterie. Nach erfolgreichem Abschluss des Handshake-Protokolls kann eine Kommunikation zwischen dem bidirektionalen Wechselrichter und der Batterie gestartet werden.

Es kann auch als vorteilhaft angesehen werden, dass bei einem Ausbleiben eines erfolgreichen Kommunikationsaufbaus zwischen dem bidirektionalen Wechselrichter und der Batterie die Bereitstellung einer DC-Versorgungsspannung für den bidirektionalen Wechselrichter durch die Batterie eingestellt wird.

Dies gewährleistet bei einem Schwarzstart der Energieversorgungseinrichtung eine sichere Betriebsführung. Sofern zu diesem Zeitpunkt der bidirektionale Wechselrichter durch keine weiteren Batterien mit einer DC-Versorgungsspannung versorgt wird, kann der Wechselrichter derart eingerichtet sein, dass er in einen abgeschalteten Zustand oder in einen Stand-by-Betrieb wechselt. Zusätzlich kann auch die Batterie in diesem Fall in einen abgeschalteten Zustand oder in einen Stand-by-Betrieb wechseln.

Gemäß einer weiteren vorteilhaften Ausgestaltung der Erfindung kann das Verfahren mit einer Energieversorgungseinrichtung durchgeführt werden, welche weitere an den bidirektionalen Wechselrichter angeschlossene Batterien umfasst. Gemäß der vorteilhaften Ausgestaltung der Erfindung wird bei dem Schwarzstart der Energieversorgungseinrichtung den weiteren Batterien jeweils eine Spannung an einer Steuerleitung bereitgestellt, welche die weiteren Batterien in einen Betriebszustand versetzen. Die Spannung wird von der Aktivierungsvorrichtung und/oder dem bidirektionalen Wechselrichter bereitgestellt, wobei die weiteren Batterien jeweils im Betriebszustand eine DC-Versorgungsspannung dem bidirektionalen Wechselrichter zur Verfügung stellen. Es wird jeweils zwischen der weiteren Batterie und dem bidirektionalen Wechselrichter ein Handshake-Protokoll gestartet zum Aufbau einer Kommunikation zwischen den beiden.

Die vorteilhafte Ausgestaltung der Erfindung ermöglicht den Schwarzstart einer Energieversorgungseinrichtung, die durch eine höhere Anzahl an angeschlossenen Batterien am Wechselrichter die Zwischenspeicherung größerer Energiemengen zulässt. Die redundante Ausführung der Batterien erhöht zudem die Ausfallsicherheit der Energieversorgungseinrichtung. Sofern die Freigabesignale von der Aktivierungsvorrichtung bereitgestellt werden, können die Batterien parallel in einen Betriebszustand versetzt werden, wodurch sich der Schwarzstart der Energieversorgungseinrichtung beschleunigt. Alternativ und um die mindestens eine Hilfsbatterie zu schonen, kann aber auch der Wechselrichter den weiteren Batterien an ihren Steuerleitungen ein Freigabesignal bereitstellen, nachdem er von der direkt durch die Aktivierungsvorrichtung aktivierten Batterie in einen Betriebszustand versetzt wurde.

Gemäß einer weiteren vorteilhaften Ausgestaltung der Erfindung kann bei dem Verfahren eine Energieversorgungseinrichtung verwendet werden, welche weitere bidirektionale Wechselrichter mit je mindestens einer am weiteren Wechselrichter angeschlossenen Batterie umfasst. Es wird jeweils mindestens einer angeschlossenen Batterie der weiteren bidirektionalen Wechselrichter eine Spannung an einer Steuerleitung bereitgestellt, welche die angeschlossene Batterie in einen Betriebszustand versetzt. Die Spannung wird von der Aktivierungsvorrichtung oder dem bidirektionalen Wechselrichter oder einer von dem bidirektionalen Wechselrichter in einen Betriebszustand versetzten separaten Backup-Einrichtung bereitgestellt.

Die vorteilhafte Ausgestaltung der Erfindung ermöglicht den Schwarzstart einer Energieversorgungseinrichtung, welche zur Notstromversorgung eines mehrphasigen lokalen Netzes ausgebildet sein kann.

Die in einen Betriebszustand versetzten Batterien der weiteren bidirektionalen Wechselrichter stellen dem jeweiligen weiteren Wechselrichter analog den obigen Ausführungen eine DC-Versorgungsspannung zur Verfügung, wodurch die weiteren bidirektionalen Wechselrichter in analoger Weise in einen Betriebszustand versetzt werden. Es wird jeweils ein Handshake-Protokoll zwischen der jeweiligen Batterie und dem weiteren Wechselrichter gestartet zum Aufbau einer Kommunikation zwischen den beiden. Die Wechselrichter und Batterien der Energieversorgungseinrichtung können baugleich ausgeführt sein. Umfasst die Energieversorgungseinrichtung eine separate Backup-Einrichtung gemäß den obigen Ausführungen, kann diese ebenfalls nach der Inbetriebsetzung die Bereitstellung eines Freigabesignals für mindestens eine an die weiteren bidirektionalen Wechselrichter angeschlossene Batterie übernehmen. In diesem Fall ist es vorteilhaft, wenn die Backup-Einrichtung von den weiteren Wechselrichtern ebenfalls mit einer Versorgungsspannung versorgt wird, für den Fall, dass sich der erste Wechselrichter, der die Backup-Einrichtung in Betrieb gesetzt hat, aufgrund eines fehlgeschlagenen Kommunikationsaufbaus mit der ihn versorgenden Batterie wieder abschaltet.

Im Falle eines erfolgreichen Aufbaus einer Kommunikation zwischen mindestens dem bidirektionalen Wechselrichter und der Batterie oder einer weiteren an den bidirektionalen Wechselrichter angeschlossenen Batterie oder zwischen einem weiteren bidirektionalen Wechselrichter der Energieversorgungseinrichtung und einer an den weiteren Wechselrichter angeschlossenen Batterie, kann die Energieversorgungseinrichtung je nach ihrer Ausgestaltung und den vorliegenden externen Bedingungen gemäß einem Normalbetrieb reagieren.

Beispielsweise kann die Energieversorgungseinrichtung zur Bereitstellung einer Notstromversorgung ausgebildet sein. Detektiert die Energieversorgungseinrichtung mittels der Backup-Einrichtung nach dem Schwarzstart den Ausfall eines öffentlichen Netzes, kann die Backup-Einrichtung das öffentliche Netz von einem lokalen Netz abtrennen und der mindestens eine bidirektionale Wechselrichter die Taktung der Wechselrichter-Brücke aufnehmen, um in dem lokalen Netz ein elektrisches Inselnetz aufzubauen.

Im Rahmen dieser Erfindung sei mit dem Begriff Netz in erster Linie die physische Ausbildung des Netzes mit den Leitungen bezeichnet. Mit dem Begriff elektrisches Netz sei in erster Linie die in einem Netz bereitgestellte Wechselspannung bezeichnet.

Eine weitere Aufgabe der Erfindung ist es, einen bidirektionalen Wechselrichter und eine Backup-Einrichtung der eingangs genannten Art anzugeben, welche alternativ als Bestandteile der Energieversorgungseinrichtung geeignet sind, so dass ein Schwarzstart der Energieversorgungseinrichtung ermöglicht ist.

Die erfindungsgemäße Aufgabe wird bei einem bidirektionalen Wechselrichter der eingangs genannten Art dadurch gelöst, dass der bidirektionale Wechselrichter eine Steuereinrichtung und Schnittstellen zum DC-seitigen Anschluss einer Batterie und zum AC-seitigen Anschluss eines Netzes umfasst, wobei mindestens eine Versorgungs-Schnittstelle für die Anbindung von zwei Batteriepolen der Batterie an den Wechselrichter angeordnet ist. Zusätzlich umfasst der bidirektionale Wechselrichter eine Schnittstelle für eine Steuerleitung der Batterie und eine Aktivierungsvorrichtung mit einer Hilfsbatterie. Die Aktivierungseinrichtung ist dazu eingerichtet, bei einer Betätigung der Aktivierungsvorrichtung bei einem Schwarzstart an der Schnittstelle für die Steuerleitung eine von der Hilfsbatterie bereitgestellte Spannung bereitzustellen, welche für eine Inbetriebsetzung der Batterie geeignet ist.

Gemäß dieser Ausgestaltung der Erfindung wird somit vorgeschlagen, die Aktivierungsvorrichtung in den Wechselrichter zu integrieren. Dies ermöglicht eine leichte Auffindbarkeit der Aktivierungsvorrichtung und reduziert die Herstellungskosten der Energieversorgungseinrichtung.

Bezüglich der Vorteile, Begriffs-Definitionen, Ausführungsbeispiele und Funktionsweisen des erfindungsgemäßen bidirektionalen Wechselrichters nach einem der Ansprüche 9 bis 16 wird auch auf die obigen Ausführungen zu den Verfahrensansprüchen 1 bis 8 verwiesen, die in analoger Weise auf den bidirektionalen Wechselrichter und seine vorteilhaften Ausgestaltungen anwendbar sind. Beispielsweise kann ein Betätigungsmittel der Aktivierungsvorrichtung außen am Gehäuse des Wechselrichters angeordnet sein.

Gemäß einer vorteilhaften Ausgestaltung des bidirektionalen Wechselrichters kann der bidirektionale Wechselrichter derart ausgebildet und eingerichtet sein, dass er bei einem Schwarzstart durch die Batterie in einen Betriebszustand versetzbar ist, insbesondere durch Anlegen einer von der Batterie bereitgestellten DC-Versorgungsspannung an der Versorgungs-Schnittstelle, welche dazu geeignet ist, den bidirektionalen Wechselrichter in einen Betriebszustand zu versetzen.

Auch wenn die Aktivierungsvorrichtung vom Wechselrichter umfasst ist, befindet sich bei einer Betätigung der Aktivierungsvorrichtung der Wechselrichter noch nicht in einem Betriebszustand. Die Hilfsbatterie stellt in diesem Moment lediglich an der/den entsprechenden Schnittstelle/n ein Freigabesignal zur Verfügung. Die Inbetriebnahme des bidirektionalen Wechselrichters erfolgt erst durch eine entsprechende Bereitstellung einer DC-Versorgungsspannung von der Batterie.

Es kann auch als vorteilhaft angesehen werden, dass die Steuereinrichtung dazu eingerichtet ist, bei einem Schwarzstart nach der Inbetriebsetzung des bidirektionalen Wechselrichters die Bereitstellung einer Spannung zur Aufrechterhaltung des Betriebszustandes der Batterie zu übernehmen.

Die Steuereinrichtung kann beispielsweise die Bereitstellung der Spannung nach dem erfolgreichen Aufbau einer Kommunikation mit der Batterie oder vor oder bei einem Start eines Handshake-Protokolls mit der Batterie oder direkt nach der Inbetriebsetzung des Wechselrichters übernehmen. Eine weitere vorteilhafte Ausgestaltung des bidirektionalen Wechselrichters kann vorsehen, dass die Steuereinrichtung dazu eingerichtet ist, nach der Übernahme die Aktivierungsvorrichtung bezüglich der Batterie in einen Anfangszustand zu versetzen.

Es kann auch als vorteilhaft angesehen werden, dass der bidirektionale Wechselrichter Schnittstellen für den Anschluss mehrerer Batterien umfasst. Die Aktivierungsvorrichtung ist derart ausgebildet und betätigbar, dass die Aktivierungsvorrichtung bei einem Schwarzstart an den Schnittstellen für die Steuerleitungen von der Hilfsbatterie bereitgestellte Spannungen bereitstellt, welche für eine Inbetriebsetzung der Batterien geeignet sind. Die Steuereinrichtung ist dazu eingerichtet, bei einem Schwarzstart nach einer Inbetriebsetzung des bidirektionalen Wechselrichters die Bereitstellung der Spannungen zur Aufrechterhaltung des Betriebszustandes der Batterien zu übernehmen und die Aktivierungsvorrichtung bezüglich der Batterien in einen Anfangszustand zu versetzen.

Alternativ könnte die Aktivierungsvorrichtung auch nur eine der Batterien in einen Betriebszustand versetzten und der bidirektionale Wechselrichter nach seiner Inbetriebnahme die Freigabesignale an den jeweiligen Steuerleitungen der restlichen am Wechselrichter angeschlossenen Batterien bereitstellen und die Bereitstellung des Freigabesignals an der ersten Steuerleitung übernehmen und die Aktivierungsvorrichtung bezüglich der Batterie in einen Anfangszustand versetzen.

Weiter kann vorteilhaft vorgesehen sein, dass der bidirektionale Wechselrichter zusätzlich DC-seitig einen Eingang zum Anschluss einer Solaranlage aufweist.

Hierzu kann der bidirektionale Wechselrichter einen DC-Zwischenkreis umfassen, wobei die Versorgungsschnittstellen für die Batterie und die Solaranlage eine Verbindung zum DC-Zwischenkreis herstellen. Der Wechselrichter kann zwischen Versorgungsschnittstelle und DC-Zwischenkreis jeweils einen internen DC-Eingangssteller umfassen.

Gemäß einer weiteren vorteilhaften Ausgestaltung der Erfindung kann der bidirektionale Wechselrichter eine interne Backup-Einrichtung oder einen Anschluss für eine separate Backup-Einrichtung umfassen, wobei der Anschluss mindestens eine Versorgungs-Schnittstelle umfasst, wobei im zweiten Fall die Steuereinrichtung dazu eingerichtet ist, bei einem Schwarzstart nach der Inbetriebsetzung des bidirektionalen Wechselrichters eine Versorgungsspannung an der Versorgungs-Schnittstelle bereitzustellen und die separate Backup-Einrichtung in einen Betriebszustand zu versetzen.

Sofern die separate Backup-Einrichtung zu ihrer Inbetriebsetzung zusätzlich ein Freigabesignal an einem Steuerleitungs-Eingang benötigt, kann der bidirektionale Wechselrichter eine zusätzliche Schnittstelle für eine Steuerleitung der separaten Backup-Einrichtung umfassen und die Steuereinrichtung dazu eingerichtet sein, nach Inbetriebsetzung des Wechselrichters zusätzlich ein Freigabesignal an der zusätzlichen Schnittstelle bereitstellen.

Weiter kann vorteilhaft vorgesehen sein, dass der bidirektionale Wechselrichter mindestens eine Feldbus-Schnittstelle zur Kommunikation mit der Batterie umfasst.

Die erfindungsgemäße Aufgabe wird bei einer Backup-Einrichtung der eingangs genannten Art dadurch gelöst, dass eine Steuereinrichtung und eine Aktivierungsvorrichtung mit einer Hilfsbatterie umfasst ist, und
- mindestens eine Schnittstelle für eine Versorgungsspannung der Backup-Einrichtung und mindestens einer Schnittstelle für eine Steuerleitung einer Batterie, wobei
- die Aktivierungseinrichtung dazu eingerichtet ist, bei einer Betätigung der Aktivierungsvorrichtung bei einem Schwarzstart an der mindestens einen Schnittstelle für die Steuerleitung einer Batterie eine von der Hilfsbatterie bereitgestellte Spannung bereitzustellen, welche für eine Inbetriebsetzung der Batterie geeignet ist.

Gemäß dieser Ausgestaltung der Erfindung wird somit alternativ vorgeschlagen, die Aktivierungsvorrichtung in die Backup-Einrichtung zu integrieren. Dies ist bei einer Energieversorgungseinrichtung für eine Notstromversorgung mit mehreren Wechselrichtern besonders vorteilhaft, da der Schwarzstart-Prozess beschleunigt werden kann, da alle angeschlossenen Wechselrichtersysteme gleichzeitig aktiviert werden können, anstatt nacheinander.

Bezüglich der Vorteile, Begriffs-Definitionen, Ausführungsbeispiele und Funktionsweisen der Backup-Einrichtung nach einem der Ansprüche 17 bis 19 wird auch auf die obigen Ausführungen zu den Verfahrensansprüchen 1 bis 8 verwiesen, die in analoger Weise auf die Backup-Einrichtung und ihre vorteilhaften Ausgestaltungen anwendbar sind. Beispielsweise kann ein Betätigungsmittel der Aktivierungsvorrichtung außen am Gehäuse der Backup-Einrichtung angeordnet sein.

Gemäß einer vorteilhaften Ausgestaltung der Backup-Einrichtung kann die Backup-Einrichtung derart eingerichtet sein, dass aus einem abgeschalteten Zustand oder Stand-by-Modus bei
- einer Beaufschlagung der Schnittstelle für die Versorgungsspannung mit einer Versorgungsspannung oder
- einer Beaufschlagung der Schnittstelle für die Versorgungsspannung mit einer Versorgungsspannung und zusätzlich einer Beaufschlagung einer Schnittstelle für eine Steuerleitung der Backup-Einrichtung mit einem Freigabesignal
- die Backup-Einrichtung in einen Betriebszustand wechselt.

Auch wenn die Aktivierungsvorrichtung von der Backup-Einrichtung umfasst ist, befindet sich bei einer Betätigung der Aktivierungsvorrichtung zum Schwarzstart der Energieversorgungseinrichtung die Backup-Einrichtung noch nicht in einem Betriebszustand. Die Hilfsbatterie stellt in diesem Moment lediglich an der mindestens einen entsprechenden Schnittstelle ein Freigabesignal zur Verfügung. Die Inbetriebnahme der Backup-Einrichtung erfolgt erst durch die Bereitstellung einer Versorgungsspannung oder die Bereitstellung einer Versorgungsspannung und eines Freigabesignals. Dies ist abhängig von der Bauart der Backup-Einrichtung. Die Versorgungsspannung kann beispielsweise von einem Wechselrichter oder von einer Batterie der Energieversorgungseinrichtung bereitgestellt werden.

Es kann auch als vorteilhaft angesehen werden, dass
- mindestens eine weitere Schnittstelle für eine Versorgungsspannung der Backup-Einrichtung oder
- mindestens eine weitere Schnittstelle für eine Versorgungsspannung der Backup-Einrichtung und mindestens eine weitere Schnittstelle für eine Steuerleitung der Backup-Einrichtung umfasst ist.

Dies hat den Vorteil, dass die Energieversorgungseinrichtung auch dann eine Notstromversorgung bereitstellen kann, wenn ein erster bidirektionaler Wechselrichter, der die Backup-Einrichtung in einen Betriebszustand versetzt hat, aufgrund eines fehlgeschlagenen Kommunikationsaufbaus mit der mindestens einen angeschlossenen Batterie sich wieder abschaltet oder in einen Stand-by-Modus wechselt. In diesem Fall ist es ausreichend, dass wenigstens einer von den anderen bidirektionalen Wechselrichtern in einem Betriebszustand verbleibt und die Backup-Einrichtung mit einer Versorgungsspannung versorgt und gegebenenfalls zusätzlich mit einem Freigabesignal.

Eine weitere Aufgabe der Erfindung ist es, eine Energieversorgungseinrichtung der eingangs genannten Art anzugeben, welche bei dem Verfahren nach einem der Ansprüche 1 bis 8 verwendbar ist und einen Schwarzstart ermöglicht.

Die erfindungsgemäße Aufgabe wird bei einer Energieversorgungseinrichtung der eingangs genannten Art dadurch gelöst, dass mindestens eine Aktivierungsvorrichtung mit einer Hilfsbatterie umfasst ist, und der bidirektionale Wechselrichter Schnittstellen zum DC-seitigen Anschluss der Batterie umfasst, wobei mindestens eine Versorgungs-Schnittstelle für die Anbindung von zwei Batteriepolen an den bidirektionalen Wechselrichter angeordnet ist, und
- die Aktivierungseinrichtung dazu eingerichtet ist, bei einer Betätigung der Aktivierungsvorrichtung bei einem Schwarzstart an einer Schnittstelle für eine Steuerleitung mindestens einer Batterie eine von der Hilfsbatterie bereitgestellte Spannung bereitzustellen, welche für eine Inbetriebsetzung der Batterie geeignet ist.

Bezüglich der Vorteile, Begriffs-Definitionen, Ausführungsbeispiele und Funktionsweisen der erfindungsgemäßen Energieversorgungseinrichtung nach einem der Ansprüche 20 bis 22 wird auch auf die obigen Ausführungen zu den Verfahrensansprüchen 1 bis 8 verwiesen, die in analoger Weise auf die Energieversorgungseinrichtung und seine vorteilhaften Ausgestaltungen anwendbar sind.

Gemäß einer vorteilhaften Ausgestaltung der Energieversorgungseinrichtung kann vorgesehen sein, dass eine separate Backup-Einrichtung umfasst ist.

Es kann auch als vorteilhaft angesehen werden, dass mindestens ein bidirektionaler Wechselrichter nach einem der Ansprüche 9 bis 16 ausgebildet ist und/oder eine Backup-Einrichtung nach einem der Ansprüche 17 bis 19 ausgebildet ist.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

Dabei zeigt die
- Fig. 1: schematisch eine Energieversorgungseinrichtung nach dem Stand der Technik,
- Fig. 2: schematisch eine Energieversorgungseinrichtung gemäß einem Ausführungsbeispiel der Erfindung in einem abgeschalteten Zustand,
- Fig. 3: schematisch die Energieversorgungseinrichtung der Fig. 2 zu einem ersten Zeitpunkt während des Schwarzstarts gemäß einem Ausführungsbeispiel des erfindungsgemäßen Verfahrens,
- Fig. 4: schematisch die Energieversorgungseinrichtung der Fig. 2 zu einem zweiten Zeitpunkt während des Schwarzstarts,
- Fig. 5: schematisch die Energieversorgungseinrichtung der Fig. 2 zu einem dritten Zeitpunkt während des Schwarzstarts,
- Fig.6: schematisch die Energieversorgungseinrichtung der Fig. 2 zu einem vierten Zeitpunkt während des Schwarzstarts,
- Fig.7: schematisch die Energieversorgungseinrichtung der Fig. 2 zu einem fünften Zeitpunkt während des Schwarzstarts,
- Fig.8: schematisch die Energieversorgungseinrichtung der Fig. 2 zu einem sechsten Zeitpunkt nach Abschluss des Schwarzstarts gemäß dem Ausführungsbeispiel des erfindungsgemäßen Verfahrens, und
- Fig.9: schematisch die Energieversorgungseinrichtung der Fig. 2 zu einem siebten Zeitpunkt während eines anschließenden Normalbetriebs gemäß einem Ausführungsbeispiel.

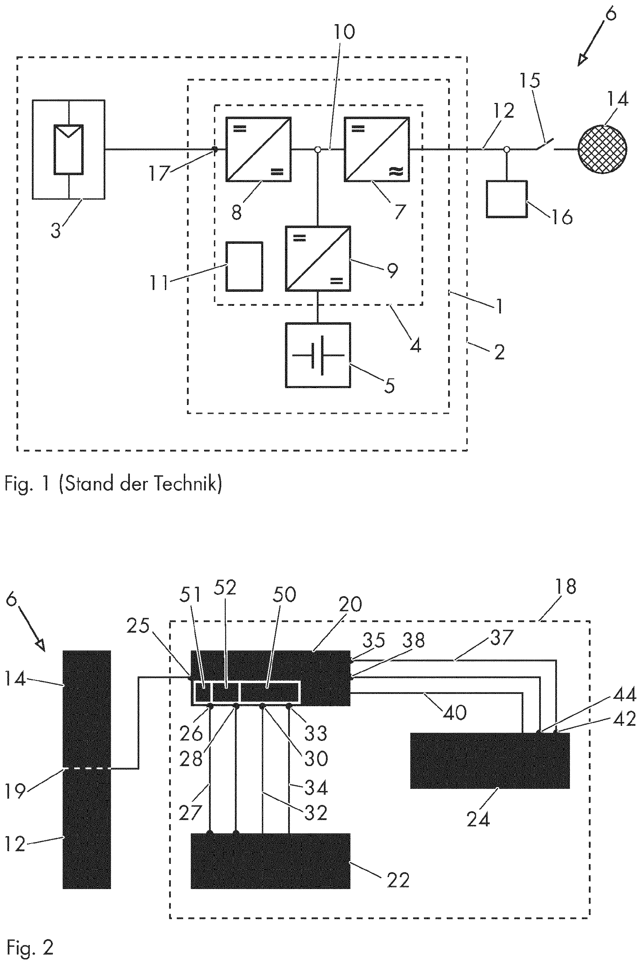

Die Figur 1 zeigt schematisch eine Energieversorgungseinrichtung 1 nach dem Stand der Technik. Die Energieversorgungseinrichtung 1 ist Teil eines Kraftwerkes 2 mit einer Solaranlage 3. Die Energieversorgungseinrichtung 1 umfasst einen bidirektionalen Wechselrichter 4 und eine Batterie 5, wobei an den bidirektionalen Wechselrichter 4 AC-seitig ein Netz 6 und DC-seitig die Batterie 5 und die Solaranlage 3 angeschlossen sind. Die in der Figur dargestellten Bestandteile des bidirektionalen Wechselrichters sind eine Wechselrichterbrücke 7, zwei Eingangs-DC-Steller 8 und 9 sowie ein Zwischenkreis 10 und eine Steuereinrichtung 11. Der Zwischenkreis 10 umfasst einen Zwischenkreiskondensator (nicht dargestellt). Das AC-seitig an den bidirektionalen Wechselrichter 4 angeschlossene Netz 6 umfasst ein lokales Netz 12 und ein öffentliches Netz 14. Das lokale Netz 12 kann mit dem Trennschalter 15 vom öffentlichen Netz 14 reversibel abgetrennt werden. An das lokale Netz 12 ist ein Verbraucher 16 angeschlossen. Die Solaranlage 3 ist DC-seitig an einem Eingang 17 des bidirektionalen Wechselrichters 4 angeschlossen.

Der bidirektionale Wechselrichter 4 kann elektrische Energie in beide Richtungen transportieren. Die Batterie 5 kann somit über den bidirektionalen Wechselrichter 4 mit elektrischer Energie aus dem Netz 6 oder von der Solaranlage 3 geladen werden. In das Netz 6 kann über den bidirektionalen Wechselrichter 4 elektrische Energie von der Solaranlage 3 und der Batterie 5 eingespeist werden. Der bidirektionale Wechselrichter 4 kann weitere Zusatzfunktionen umfassen, wie beispielsweise die Bereitstellung von Leistung zur Stützung des öffentlichen Netzes 14 oder eine Optimierung eines Arbeitspunktes der Solaranlage 3 (MPP-Tracking).

Die Figur 2 zeigt schematisch eine Energieversorgungseinrichtung 18 gemäß einem ersten Ausführungsbeispiel der Erfindung in einem abgeschalteten Zustand.

Die Energieversorgungseinrichtung 18 umfasst einen bidirektionalen Wechselrichter 20, eine DC-seitig an den Wechselrichter angeschlossene Batterie 22 und eine separate Backup-Einrichtung 24. Der bidirektionale Wechselrichter 20 umfasst zum Anschluss der Batterie 22 Schnittstellen mit einer Schnittstelle 26 für eine Steuerleitung 27 der Batterie und einer Versorgungsschnittstelle 28 für eine Anbindung der beiden Batteriepole der Batterie. Zusätzlich umfasst der bidirektionale Wechselrichter 20 eine Feldbus-Schnittstelle 30 für eine Feldbus-Verbindung 32 zur Kommunikation mit der Batterie. Eine weitere Schnittstelle 33 dient der Bereitstellung einer Spannungsversorgung für ein Batterie-Management-System der Batterie 22 über die Verbindung 34. In Richtung der separaten Backup-Einrichtung 24 umfasst der bidirektionale Wechselrichter 20 Schnittstellen mit einer Schnittstelle 35 für eine Steuerleitung 37, die eine Schnittstelle 42 ansteuert, und einer Versorgungs-Schnittstelle 38 für eine Versorgungsspannung, die der Backup-Einrichtung an der Schnittstelle 44 zur Verfügung gestellt wird. Zusätzlich ist noch eine Feldbus-Verbindung 40 zwischen dem bidirektionalen Wechselrichter 20 und der separaten Backup-Einrichtung 24 dargestellt für eine Kommunikation zwischen den beiden Geräten.

Eine AC-seitige Schnittstelle 25 des bidirektionalen Wechselrichters 20 ist mit einem Netz 6 verbunden. Das Netz 6 umfasst ein öffentliches Netz 14 und ein lokales Netz 12, wobei die beiden mittels einer Trenneinrichtung 19 reversibel voneinander abgetrennt werden können.

Der bidirektionale Wechselrichter 20 umfasst eine Steuereinrichtung 50 und eine Aktivierungseinrichtung 51. Die Aktivierungseinrichtung 51 weist eine Hilfsbatterie 52 auf und ist teilweise in die Steuereinrichtung 50 integriert.

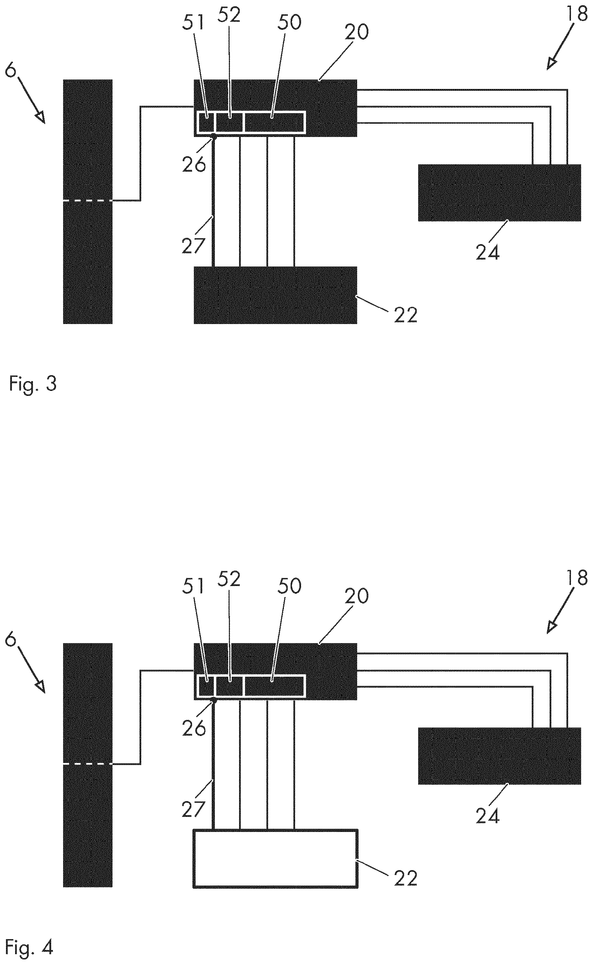

Im Folgenden soll anhand der Figuren 3 bis 8 ein Verfahren zum Schwarzstart der Energieversorgungseinrichtung 18 gemäß einem Ausführungsbeispiel der Erfindung dargestellt und näher erläutert werden, wobei in diesem Zusammenhang auch eine Erläuterung der Funktion der hier dargestellten Energieversorgungseinrichtung 18 erfolgt.

Die Figur 3 zeigt schematisch die Energieversorgungseinrichtung 18 der Figur 2 zu einem ersten Zeitpunkt während des Schwarzstarts gemäß einem Ausführungsbeispiel des erfindungsgemäßen Verfahrens. Es sind nur die zur Beschreibung der Figur 3 relevanten Bezugszeichen entsprechend der Figur 2 dargestellt.

Zu dem ersten Zeitpunkt wurde die Aktivierungseinrichtung 51 betätigt und stellt ein Freigabesignal in der Form einer Spannung an der Schnittstelle 26 bereit. Die Spannung wird von der Hilfsbatterie 52 bereitgestellt und beaufschlagt die Steuerleitung 27 mit einem Freigabesignal. Die Beaufschlagung der Steuerleitung 27 mit dem Freigabesignal ist in der Figur durch eine fettere Liniengestaltung der Steuerleitung 27 kenntlich gemacht. Der bidirektionale Wechselrichter 20 befindet sich zu diesem Zeitpunkt nicht in einem Betriebszustand, wie er im Rahmen dieser Erfindung verstanden werden soll.

Die Figur 4 zeigt schematisch die Energieversorgungseinrichtung 18 der Figur 2 zu einem zweiten Zeitpunkt während des Schwarzstarts gemäß dem Ausführungsbeispiel des erfindungsgemäßen Verfahrens. Es sind ebenfalls nur die zur Beschreibung der Figur 4 relevanten Bezugszeichen entsprechend der Figur 2 dargestellt.

Gegenüber der Figur 3 befindet sich die Batterie 22 nun zu dem zweiten Zeitpunkt in einem Betriebszustand, der in der Figur 4 durch die hellere Gestaltung des Gerätes kenntlich gemacht ist. Die Batterie 22 wurde aufgrund der an der Steuerleitung 27 anliegenden Spannung in einen Betriebszustand versetzt. Die Steuerleitung 27 kann auch mit Enable-Leitung bezeichnet werden. Die von der Aktivierungseinrichtung 51 bereitgestellte Spannung entspricht einem Spannungswert, der als Freigabesignal von der Batterie 22 interpretiert wird und diese in einen Betriebszustand versetzt. Zu dem zweiten Zeitpunkt stellt die Aktivierungseinrichtung 51 das Freigabesignal weiterhin zur Verfügung.

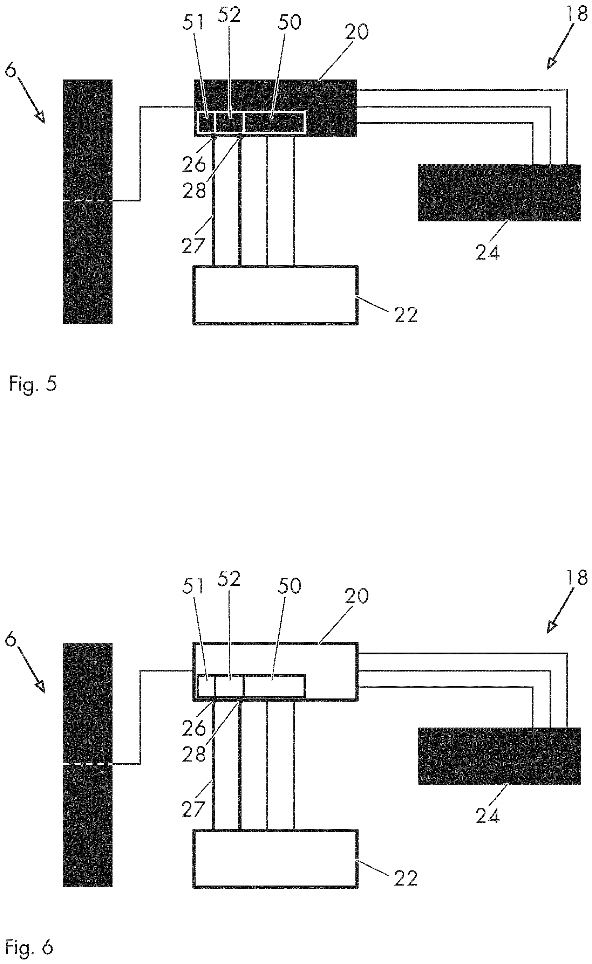

Die Figur 5 zeigt schematisch die Energieversorgungseinrichtung der Figur 2 zu einem dritten Zeitpunkt während des Schwarzstarts gemäß dem Ausführungsbeispiel des erfindungsgemäßen Verfahrens.

Die sich in einem Betriebszustand befindliche Batterie 22 stellt zu dem dritten Zeitpunkt eine DC-Versorgungsspannung an der Versorgungs-Schnittstelle 28 dem bidirektionalen Wechselrichter 20 zur Verfügung, welche dazu geeignet ist, den bidirektionalen Wechselrichter 20 in einen Betriebszustand zu versetzen. Die Aktivierungseinrichtung 51 beaufschlagt die Steuerleitung 27 zu diesem Zeitpunkt immer noch mit dem Freigabesignal.

Die Figur 6 zeigt schematisch die Energieversorgungseinrichtung 18 zu einem vierten Zeitpunkt während des Schwarzstarts gemäß dem Ausführungsbeispiel des erfindungsgemäßen Verfahrens.

Der bidirektionale Wechselrichter 20 wurde durch die DC-Versorgungsspannung an der Versorgungs-Schnittstelle 28 in einen Betriebszustand versetzt und wird weiterhin mit einer DC-Versorgungsspannung von der Batterie 22 versorgt. Die Aktivierungseinrichtung 51 stellt weiterhin mittels der Hilfsbatterie 52 das Freigabesignal für die Batterie an der Steuerleitung 27 zur Verfügung.

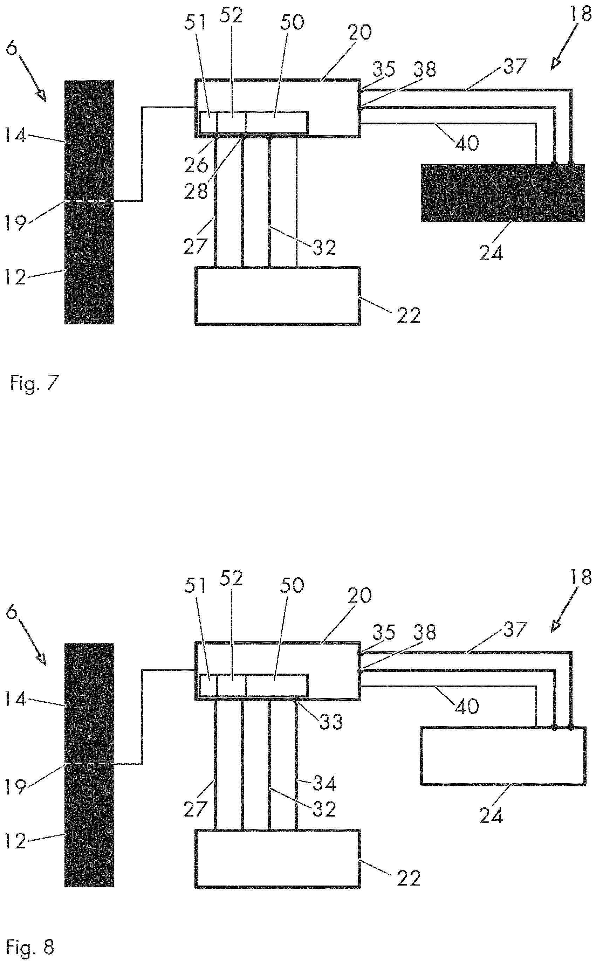

Die Figur 7 zeigt schematisch die Energieversorgungseinrichtung 18 zu einem fünften Zeitpunkt während des Schwarzstarts gemäß dem Ausführungsbeispiel des erfindungsgemäßen Verfahrens.

Die Steuereinrichtung 50 des bidirektionalen Wechselrichters 20 hat die Bereitstellung der zunächst von der Hilfsbatterie 52 bereitgestellten Spannung an der Schnittstelle 26 zur Aufrechterhaltung des Betriebszustandes der Batterie 22 übernommen und die Aktivierungseinrichtung 51 in einen Anfangszustand versetzt. Die Energie hierfür bezieht die Steuereinrichtung 50 aus der von der Batterie 22 bereitgestellten DC-Versorgungsspannung.

Über die Feldbus-Verbindung 32 starten die Batterie 22 und der bidirektionale Wechselrichter 20 nun ein Handshake-Protokoll zum Aufbau einer Kommunikation zwischen den beiden.

Zudem versorgt der bidirektionale Wechselrichter 20 über die Versorgungs-Schnittstelle 38 die separate Backup-Einrichtung 24 mit einer Versorgungsspannung und stellt ein Freigabesignal an der Schnittstelle 35 für die Steuerleitung 37 der separaten Backup-Einrichtung zur Verfügung. Hierzu ist die Steuereinrichtung 50 entsprechend eingerichtet. Die Energie hierzu bezieht der bidirektionale Wechselrichter 20 aus der anliegenden DC-Versorgungsspannung von der Batterie 22 über die Versorgungs-Schnittstelle 28.

Das Freigabesignal auf der Steuerleitung 37 und/oder die Versorgungsspannung für die separate Backup-Einrichtung 24 sind dazu geeignet, die separate Backup-Einrichtung in einen Betriebszustand zu versetzten.

Die Figur 8 zeigt schematisch die Energieversorgungseinrichtung 18 zu einem sechsten Zeitpunkt nach Abschluss des Schwarzstarts gemäß dem Ausführungsbeispiel des erfindungsgemäßen Verfahrens.

Die durch das Freigabesignal und/oder die Versorgungsspannung in einen Betriebszustand versetzte separate Backup-Einrichtung 24 und der bidirektionale Wechselrichter 20 haben nach erfolgreichem Abschluss eines Handshake-Protokolls über die Feldbus-Verbindung 40 eine Kommunikation zwischen den beiden Geräten aufgebaut. Auch die Batterie 22 und der bidirektionalen Wechselrichter 20 haben eine Kommunikation über die Feldbus-Verbindung 32 aufgebaut. Zusätzlich stellt der bidirektionale Wechselrichter 20 an der Schnittstelle 33 über die Verbindung 34 eine Versorgungsspannung der Batterie 22 für ein Batterie-Management-System (nicht dargestellt) zur Verfügung. In diesem Zustand kann die Energieversorgungseinrichtung einen Normalbetrieb aufnehmen.

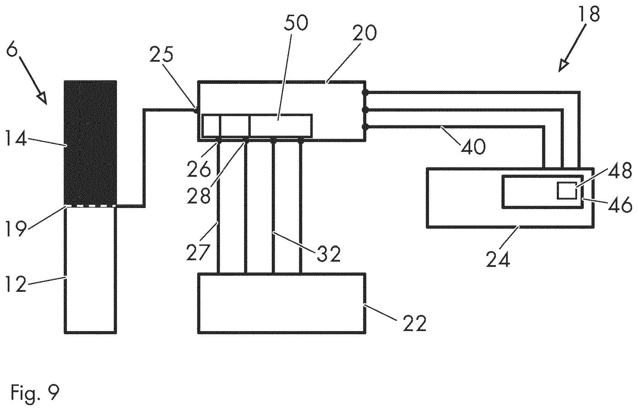

Die Figur 9 zeigt die Energieversorgungseinrichtung 18 der Figur 2 zu einem siebten Zeitpunkt während eines anschließenden Normalbetriebs gemäß einem Ausführungsbeispiel.

Die Backup-Einrichtung 24 umfasst ein Steuermodul 46 mit einem Microcontroller 48 und steht mit Sensoren (nicht dargestellt) und der Trenneinrichtung 19 in einer Verbindung (nicht dargestellt). Die Backup-Einrichtung 24 ist dazu ausgebildet, im Zusammenspiel mit dem bidirektionalen Wechselrichter 20, bei einem Ausfall des öffentlichen Netzes 14 einen Notstrombetrieb des lokalen Netzes 12 zu ermöglichen. Gemäß dem dargestellten Ausführungsbeispiel hat die Backup-Einrichtungen 24 hierzu einen Ausfall des öffentlichen Netzes 14 detektiert und das lokale Netz 12 durch Ansteuern der Trenneinrichtung 19 vom öffentlichen Netz 14 abgetrennt und im Zusammenspiel mit dem bidirektionalen Wechselrichter 20 einen Inselbetrieb des lokalen Netzes 12 aufgebaut. Der bidirektionale Wechselrichter 20 entnimmt hierbei der Batterie 22 elektrische Energie, die er den angeschlossenen Verbrauchern (nicht dargestellt) des lokalen Netzes 12 zur Verfügung stellt.

### Bezugszeichenliste

- 1: Energieversorgungseinrichtung
- 2: Kraftwerk
- 3: Solaranlage
- 4: Bidirektionaler Wechselrichter
- 5: Batterie
- 6: Netz
- 7: Wechselrichterbrücke
- 8: Eingangs-DC-Steller
- 9: Eingangs-DC-Steller
- 10: Zwischenkreis
- 11: Steuereinrichtung
- 12: Lokales Netz
- 14: Öffentliches Netz
- 15: Trennschalter
- 16: Verbraucher
- 17: Eingang
- 18: Energieversorgungseinrichtung
- 19: Trenneinrichtung
- 20: Bidirektionaler Wechselrichter
- 22: Batterie
- 24: Backup-Einrichtung
- 25: AC-seitige Schnittstelle
- 26: Schnittstelle
- 27: Steuerleitung
- 28: Versorgungs-Schnittstelle
- 30: Feldbus-Schnittstelle
- 32: Feldbus-Verbindung
- 33: Schnittstelle
- 34: Verbindung
- 35: Schnittstelle
- 37: Steuerleitung
- 38: Versorgungs-Schnittstelle
- 40: Feldbus-Verbindung
- 42: Schnittstelle
- 44: Schnittstelle
- 46: Steuermodul
- 48: Microcontroller
- 50: Steuereinrichtung
- 51: Aktivierungseinrichtung
- 52: Hilfsbatterie

## Patentansprüche

1. Verfahren zum Schwarzstart einer Energieversorgungseinrichtung (18), wobei die Energieversorgungseinrichtung (18) mindestens einen bidirektionalen Wechselrichter (20) mit einem AC-seitigen Anschluss (25) für ein Netz (6) und eine DC-seitig an den bidirektionalen Wechselrichter (20) angeschlossene Batterie (22), welche neben zwei Batteriepolen zur Anbindung an eine Versorgungsschnittstelle (28) des bidirektionalen Wechselrichters (20) mindestens eine Steuerleitung (27) aufweist, deren Beaufschlagung mit einer Spannung eine Inbetriebsetzung der Batterie (22) bewirkt, sowie eine Aktivierungseinrichtung (51) umfasst, welche dazu eingerichtet ist, bei einer Betätigung der Aktivierungsvorrichtung (51) bei einem Schwarzstart an einer Schnittstelle (26) für die Steuerleitung (27) eine von einer Hilfsbatterie (52) bereitgestellte Spannung bereitzustellen, welche für eine Inbetriebsetzung der Batterie (22) geeignet ist, wobei
- in einem Verfahrensschritt die Aktivierungseinrichtung (51) der Energieversorgungseinrichtung (18) betätigt wird, so dass die Aktivierungseinrichtung die Steuerleitung (27) der Batterie (22) mit einer elektrischen Spannung beaufschlagt, so dass die Batterie (22) in einen Betriebszustand versetzt wird, welcher von einem abgeschalteten Zustand oder einem Stand-by-Modus verschieden ist, wobei die von der Aktivierungseinrichtung (51) bereitgestellte Spannung von der Hilfsbatterie (52) bereitgestellt wird, und
- in einem weiteren Verfahrensschritt nach der Beaufschlagung der Steuerleitung (27) durch die von der Hilfsbatterie (52) bereitgestellte Spannung der bidirektionale Wechselrichter (20) in einen Betriebszustand versetzt wird, welcher von einem abgeschalteten Zustand oder einem Stand-by-Modus verschieden ist.

2. Verfahren nach Anspruch 1, wobei
- in dem weiteren Verfahrensschritt die von der Aktivierungseinrichtung (51) in den Betriebszustand versetzte Batterie (22) eine DC-Versorgungsspannung dem bidirektionalen Wechselrichter (20) zur Verfügung stellt, welche den bidirektionalen Wechselrichter (20) in einen Betriebszustand versetzt, der von einem abgeschalteten Zustand oder einem Stand-by-Modus verschieden ist.

3. Verfahren nach einem der Ansprüche 1 oder 2, wobei die Energieversorgungseinrichtung (18) eine separate oder eine vom bidirektionalen Wechselrichter (20) umfasste Backup-Einrichtung aufweist, welche dazu ausgebildet ist, einen Ausfall eines öffentlichen Netzes (14) zu detektieren und ein an den bidirektionalen Wechselrichter (20) AC-seitig angeschlossenes lokales Netz (12) von dem öffentlichen Netz (14) zu trennen, und wobei im Fall einer separaten Backup-Einrichtung (24) diese zusätzlich, insbesondere vom bidirektionalen Wechselrichter (20), mit einer Versorgungsspannung versorgt und in einen Betriebszustand versetzt wird, welcher von einem abgeschalteten Zustand oder einem Stand-by-Modus verschieden ist.

4. Verfahren nach einem der Ansprüche 1 bis 3, wobei der bidirektionale Wechselrichter (20) im Betriebszustand an einer Steuerleitung (27) der Batterie (22) die Bereitstellung der zunächst von der Aktivierungseinrichtung (51) bereitgestellten Spannung übernimmt und die Aktivierungseinrichtung (51) bezüglich der Batterie (22) in einen Anfangszustand versetzt wird, in dem durch eine Betätigung der Aktivierungsvorrichtung (51) ein erneuter Schwarzstart gestartet werden kann.

5. Verfahren nach einem der vorhergehenden Ansprüche 1 bis 4, wobei die Energieversorgungseinrichtung (18) an den bidirektionalen Wechselrichter (20) angeschlossene weitere Batterien umfasst, welche jeweils neben zwei Batteriepolen zur Anbindung an eine Versorgungsschnittstelle (28) des bidirektionalen Wechselrichters (20) mindestens eine Steuerleitung (27) aufweisen, deren Beaufschlagung mit einer Spannung eine Inbetriebsetzung der Batterie (22) bewirkt, wobei den weiteren Batterien jeweils eine Spannung an der Steuerleitung (27) bereitgestellt wird, welche die weiteren Batterien in einen Betriebszustand versetzen, der von einem abgeschalteten Zustand oder einem Stand-by-Modus verschieden ist, wobei die Spannung von der Aktivierungseinrichtung (51) und/oder dem bidirektionalen Wechselrichter (20) bereitgestellt wird, und die weiteren Batterien jeweils im Betriebszustand eine DC-Versorgungsspannung dem bidirektionalen Wechselrichter (20) zur Verfügung stellen und jeweils zwischen der weiteren Batterie und dem bidirektionalen Wechselrichter (20) ein Handshake-Protokoll gestartet wird zum Aufbau einer Kommunikation zwischen den beiden.

6. Verfahren nach einem der vorangehenden Ansprüche 1 bis 5, wobei die Energieversorgungseinrichtung (18) weitere bidirektionale Wechselrichter mit je mindestens einer am weiteren bidirektionalen Wechselrichter angeschlossenen Batterie (22) umfasst, und jeweils mindestens einer angeschlossenen Batterie (22) der weiteren bidirektionalen Wechselrichter eine Spannung an einer Steuerleitung (27) bereitgestellt wird, welche die angeschlossene Batterie (22) in einen Betriebszustand versetzt, der von einem abgeschalteten Zustand oder einem Stand-by-Modus verschieden ist, wobei die Spannung von der Aktivierungseinrichtung (51) oder dem bidirektionalen Wechselrichter (20) oder einer von dem bidirektionalen Wechselrichter (20) in einen von einem abgeschalteten Zustand oder einem Stand-by-Modus verschiedenen Betriebszustand versetzten separaten Backup-Einrichtung (24) bereitgestellt wird.

7. Bidirektionaler Wechselrichter (20) mit
- einer Steuereinrichtung (50) und Schnittstellen zum DC-seitigen Anschluss einer Batterie (22), welche neben zwei Batteriepolen zur Anbindung an eine Versorgungsschnittstelle (28) des bidirektionalen Wechselrichters (20) mindestens eine Steuerleitung (27) aufweist, deren Beaufschlagung mit einer Spannung eine Inbetriebsetzung der Batterie (22) bewirkt, und zum AC-seitigen Anschluss eines Netzes (6), wobei mindestens eine Versorgungs-Schnittstelle (28) für die Anbindung der zwei Batteriepole der Batterie an den bidirektionalen Wechselrichter (20) angeordnet ist, und
- einer Schnittstelle (26) für die Steuerleitung (27) der Batterie (22), und
- einer Aktivierungseinrichtung (51) mit einer Hilfsbatterie (52), wobei
- die Aktivierungseinrichtung (51) dazu eingerichtet ist, bei einer Betätigung der Aktivierungseinrichtung bei einem Schwarzstart an der Schnittstelle (26) für die Steuerleitung (27) eine von der Hilfsbatterie (52) bereitgestellte Spannung bereitzustellen, welche für eine Inbetriebsetzung der Batterie (22) geeignet ist.

8. Bidirektionaler Wechselrichter (4, 20) nach Anspruch 7, wobei der bidirektionale Wechselrichter (20) bei einem Schwarzstart durch die Batterie (22) in einen Betriebszustand versetzbar ist, welcher von einem abgeschalteten Zustand oder einem Stand-by-Modus verschieden ist, insbesondere durch Anlegen einer von der Batterie (22) bereitgestellten DC-Versorgungsspannung an der Versorgungs-Schnittstelle (28), welche dazu geeignet ist, den bidirektionalen Wechselrichter (20) in einen Betriebszustand zu versetzen, der von einem abgeschalteten Zustand oder einem Stand-by-Modus verschieden ist.

9. Bidirektionaler Wechselrichter (20) nach einem der Ansprüche 7 oder 8, wobei die Steuereinrichtung (50) dazu eingerichtet ist, bei einem Schwarzstart nach der Inbetriebsetzung des bidirektionalen Wechselrichters (20) die Bereitstellung einer Spannung zur Aufrechterhaltung des Betriebszustandes der Batterie (22) zu übernehmen und wobei die Steuereinrichtung (50) optional dazu eingerichtet ist, nach der Übernahme die Aktivierungseinrichtung (51) bezüglich der Batterie (22) in einen Anfangszustand zu versetzen, in dem durch eine Betätigung der Aktivierungsvorrichtung (51) ein erneuter Schwarzstart gestartet werden kann.

10. Bidirektionaler Wechselrichter (20) nach einem der Ansprüche 7 bis 9, wobei der bidirektionale Wechselrichter (20) Schnittstellen für den Anschluss mehrerer Batterien (22) umfasst, welche jeweils neben zwei Batteriepolen zur Anbindung an eine Versorgungsschnittstelle (28) des bidirektionalen Wechselrichters (20) mindestens eine Steuerleitung (27) aufweisen, deren Beaufschlagung mit einer Spannung eine Inbetriebsetzung der Batterie (22) bewirkt, wobei die Aktivierungseinrichtung (51) derart ausgebildet und betätigbar ist, dass die Aktivierungseinrichtung (51) bei einem Schwarzstart an den Schnittstellen (26) für die Steuerleitungen (27) von der Hilfsbatterie (52) bereitgestellte Spannungen bereitstellt, welche für eine Inbetriebsetzung der Batterien (22) geeignet sind, und
- die Steuereinrichtung (50) dazu eingerichtet ist, bei einem Schwarzstart nach einer Inbetriebsetzung des bidirektionalen Wechselrichters (20) die Bereitstellung der Spannungen zur Aufrechterhaltung des Betriebszustandes der Batterien (22) zu übernehmen und die Aktivierungseinrichtung (51) bezüglich der Batterien (22) in einen Anfangszustand zu versetzen, in dem durch eine Betätigung der Aktivierungsvorrichtung (51) ein erneuter Schwarzstart gestartet werden kann.

11. Bidirektionaler Wechselrichter (20) nach einem der Ansprüche 7 bis 10, wobei der bidirektionale Wechselrichter (20) eine interne Backup-Einrichtung (24) oder einen Anschluss für eine separate Backup-Einrichtung (24) umfasst, welche dazu ausgebildet ist, einen Ausfall eines öffentlichen Netzes (14) zu detektieren und ein an den bidirektionalen Wechselrichter (20) AC-seitig angeschlossenes lokales Netz (12) von dem öffentlichen Netz (14) zu trennen, wobei der Anschluss mindestens eine Versorgungs-Schnittstelle (38) umfasst, wobei im Fall einer separaten Backup-Einrichtung (24) die Steuereinrichtung (50) dazu eingerichtet ist, bei einem Schwarzstart nach der Inbetriebsetzung des bidirektionalen Wechselrichters (20) eine Versorgungsspannung an der Versorgungs-Schnittstelle (38) bereitzustellen und die separate Backup-Einrichtung (24) in einen Betriebszustand zu versetzen, welcher von einem abgeschalteten Zustand oder einem Stand-by-Modus verschieden ist.

12. Backup-Einrichtung (24), welche dazu ausgebildet ist, einen Ausfall eines öffentlichen Netzes (14) zu detektieren und ein an einen bidirektionalen Wechselrichter (20) AC-seitig angeschlossenes lokales Netz (12) von dem öffentlichen Netz (14) zu trennen, mit einer Steuereinrichtung (50) und einer Aktivierungseinrichtung (51) mit einer Hilfsbatterie (52), und
- mindestens einer Schnittstelle (44) für eine Versorgungsspannung der Backup-Einrichtung (24) und mindestens einer Schnittstelle (26) für eine Steuerleitung (27) einer Batterie (22), welche neben zwei Batteriepolen zur Anbindung an eine Versorgungsschnittstelle (28) des bidirektionalen Wechselrichters (20) mindestens eine Steuerleitung (27) aufweist, deren Beaufschlagung mit einer Spannung eine Inbetriebsetzung der Batterie (22) bewirkt, wobei
- die Aktivierungseinrichtung (51) dazu eingerichtet ist, bei einer Betätigung der Aktivierungseinrichtung (51) bei einem Schwarzstart an der mindestens einen Schnittstelle (26) für die Steuerleitung (27) der Batterie (22) eine von der Hilfsbatterie (52) bereitgestellte Spannung bereitzustellen, welche für eine Inbetriebsetzung der Batterie (22) geeignet ist.

13. Backup-Einrichtung (24) nach Anspruch 12, wobei die Backup-Einrichtung (24) derart eingerichtet ist, dass aus einem abgeschalteten Zustand oder Stand-by-Modus bei
- einer Beaufschlagung der Schnittstelle (44) für die Versorgungsspannung mit einer Versorgungsspannung oder
- einer Beaufschlagung der Schnittstelle (44) für die Versorgungsspannung mit einer Versorgungsspannung und zusätzlich einer Beaufschlagung einer Schnittstelle (42) für eine Steuerleitung (37) der Backup-Einrichtung (24) mit einem Freigabesignal
- die Backup-Einrichtung (24) in einen von dem abgeschalteten Zustand oder dem Stand-by-Modus verschiedenen Betriebszustand wechselt, wobei optional
- mindestens eine weitere Schnittstelle (44) für eine Versorgungsspannung der Backup-Einrichtung (24) oder
- mindestens eine weitere Schnittstelle (44) für eine Versorgungsspannung der Backup-Einrichtung (24) und mindestens eine weitere Schnittstelle (42) für eine Steuerleitung (37) der Backup-Einrichtung (24) umfasst ist.

14. Energieversorgungseinrichtung (18) mit
- mindestens einem bidirektionalen Wechselrichter (20) mit einer AC-seitigen Schnittstelle (25) zum Anschluss eines Netzes (6),
- mindestens einer DC-seitig an den bidirektionalen Wechselrichter (20) angeschlossenen Batterie (22), welche neben zwei Batteriepolen zur Anbindung an eine Versorgungsschnittstelle (28) des bidirektionalen Wechselrichters (20) mindestens eine Steuerleitung (27) aufweist, deren Beaufschlagung mit einer Spannung eine Inbetriebsetzung der Batterie (22) bewirkt, und
- mindestens einer Aktivierungseinrichtung (51) mit einer Hilfsbatterie (52), wobei
- der bidirektionale Wechselrichter (20) Schnittstellen zum DC-seitigen Anschluss der Batterie (22) umfasst, wobei mindestens eine Versorgungs-Schnittstelle (28) für die Anbindung von zwei Batteriepolen der Batterie (22) an den bidirektionalen Wechselrichter (20) angeordnet ist, und
- die Aktivierungseinrichtung (51) dazu eingerichtet ist, bei einer Betätigung der Aktivierungseinrichtung (51) bei einem Schwarzstart an einer Schnittstelle (26) für eine Steuerleitung (27) mindestens einer Batterie (22) eine von der Hilfsbatterie (52) bereitgestellte Spannung bereitzustellen, welche für eine Inbetriebsetzung der Batterie (22) geeignet ist.

15. Energieversorgungseinrichtung (18) nach Anspruch 14, wobei mindestens ein bidirektionaler Wechselrichter (20) nach einem der Ansprüche 7 bis 11 ausgebildet ist und/oder eine Backup-Einrichtung (24) aufweist, die nach einem der Ansprüche 12 oder 13 ausgebildet ist.

## Claims

1. A method for black starting a power supply device (18), wherein the power supply device (18) comprises at least one bidirectional inverter (20) having an AC-side connection (25) for a grid (6) and a battery (22) connected to the DC side of the bidirectional inverter (20), wherein the battery (22) has, in addition to two battery poles for a connection to a supply interface (28) of the bidirectional inverter (20), at least one control line (27), the supply with voltage of which causes the battery (22) to be put into operation, and an activation device (51), adapted to provide at an interface (26) to the control line (27) a voltage supplied by an auxiliary battery (52) when the activation device (51) is actuated in the event of a black start, the voltage being suitable for starting up the Battery (22), wherein
- a method step involves the activation device (51) of the power supply device (18) being operated, so that the activation device applies a voltage to the control line (27) of the battery (22) such that the battery (22) is put into an operating state, which is different from a shut-down state or a standby mode, wherein the voltage provided by the activation device (51) is provided by the auxiliary battery (52), and
- a further method step involves the bidirectional inverter (20) being put into an operating state, which is different from a shut-down state or a standby mode, after the voltage provided by the auxiliary battery (52) is applied to the control line (27).

2. The method as claimed in claim 1, wherein
- the further method step involves the battery (22) that has been put into the operating state by the activation device (51) making a DC supply voltage available to the bidirectional inverter (20), which DC supply voltage puts the bidirectional inverter (20) into an operating state, which is different from a shut-down state or a standby mode

3. The method as claimed in either of claims 1 and 2, wherein the power supply device (18) has a separate backup device or a backup device that the bidirectional inverter (20) comprises, which is designed to detect a failure of a public grid (14) and to disconnect a local grid (12) connected to the AC side of the bidirectional inverter (20) from the public grid (14) and wherein, in the case of a separate backup device (24), the separate backup device (24) is additionally supplied with a supply voltage, in particular from the bidirectional inverter (20), and put into an operating state, which is different from a shut-down state or a standby mode.

4. The method as claimed in any one of claims 1 to 3, wherein the bidirectional inverter (20), in the operating state, takes over the provision of the voltage, initially provided by the activation device (51), on a control line (27) of the battery (22), and the activation device (51) is put into an initial state for the battery (22), in which a black start can be started again by actuating the activation device (51).

5. The method as claimed in any one of the preceding claims 1 to 4, wherein the power supply device (18) comprises further batteries connected to the bidirectional inverter (20), each of which has, in addition to two battery poles for a connection to a supply interface (28) of the bidirectional inverter (20), at least one control line (27), the supply with voltage of which causes the battery (22) to be put into operation, wherein the further batteries are each provided with a voltage at the control line (27), which voltage puts the further batteries into an operating state, which is different from a shut-down state or a standby mode, wherein the voltage is provided by the activation device (51) and/or the bidirectional inverter (20), and the further batteries, in the operating state, each make a DC supply voltage available to the bidirectional inverter (20), and a handshake protocol is started in each case between the further battery and the bidirectional inverter (20) for the purpose of setting up a communication between the two.

6. The method as claimed in any one of preceding claims 1 to 5, wherein the power supply device (18) comprises further bidirectional inverters, each having at least one battery (22) connected to the further bidirectional inverter, and in each case at least one connected battery (22) of the further bidirectional inverters is provided with a voltage on a control line (27) that puts the connected battery (22) into an operating state, which is different from a shut-down state or a standby mode, wherein the voltage is provided by the activation device (51) or the bidirectional inverter (20) or a separate backup device (24) that has been put by the bidirectional inverter (20) into an operating state different from a shut-down state or a standby mode.

7. A bidirectional inverter (20) having
- a control device (50) and interfaces for connecting a battery (22) on the DC side, which has, in addition to two battery poles for a connection to a supply interface (28) of the bidirectional inverter (20), at least one control line (27), the supply with voltage of which causes the battery (22) to be put into operation, and for connecting a grid (6) on the AC side, wherein at least one supply interface (28) is arranged for connecting the two battery poles of the battery to the bidirectional inverter (20), and
- an interface (26) for the control line (27) of the battery (22), and
- an activation device (51) having an auxiliary battery (52), wherein
- the activation device (51) is configured so as, when the activation device is operated in the event of a black start, to provide on the interface (26) for the control line (27) a voltage, provided by the auxiliary battery (52), that is suitable for starting up the battery (22).

8. The bidirectional inverter (4, 20) as claimed in claim 7, wherein the bidirectional inverter (20) is able to be put into an operating state, which is different from a shut-down state or a standby mode, by the battery (22) in the event of a black start, in particular by applying to the supply interface (28) a DC supply voltage, provided by the battery (22), that is suitable for putting the bidirectional inverter (20) into an operating state, which is different from a shut-down state or a standby mode.

9. The bidirectional inverter (20) as claimed in either of claims 7 and 8, wherein the control device (50) is configured so as, in the event of a black start, to take over the provision of a voltage to maintain the operating state of the battery (22) after the bidirectional inverter (20) is started up and wherein the control device (50) is configured optionally to put the activation device (51) into an initial state for the battery (22) after said provision is taken over, in which a black start can be started again by actuating the activation device (51).

10. The bidirectional inverter (20) as claimed in any one of claims 7 to 9, wherein the bidirectional inverter (20) comprises interfaces for connecting multiple batteries (22), each of which has, in addition to two battery poles for a connection to a supply interface (28) of the bidirectional inverter (20), at least one control line (27), the supply with voltage of which causes the battery (22) to be put into operation, wherein the activation device (51) is designed and operable such that the activation device (51), in the event of a black start, provides on the interfaces (26) for the control lines (27) voltages, provided by the auxiliary battery (52), that are suitable for starting up the batteries (22), and
- the control device (50) is designed so as, in the event of a black start, to take over the provision of the voltages to maintain the operating state of the batteries (22) after the bidirectional inverter (20) is started up and to put the activation device (51) into an initial state for the batteries (22), in which a black start can be started again by actuating the activation device (51).

11. The bidirectional inverter (20) as claimed in any one of claims 7 to 10, wherein the bidirectional inverter (20) comprises an internal backup device (24) or a connection for a separate backup device (24), which is designed to detect a failure of a public grid (14) and to disconnect a local grid (12) connected to the AC side of the bidirectional inverter (20) from the public grid (14), wherein the connection comprises at least one supply interface (38), wherein, in the case of a separate backup device (24), the control device (50) is configured so as, in the event of a black start, to provide a supply voltage on the supply interface (38) after the bidirectional inverter (20) is started up and to put the separate backup device (24) into an operating state, which is different from a shut-down state or a standby mode.

12. A backup device (24), which is designed to detect a failure of a public grid (14) and to disconnect a local grid (12) connected to the AC side of a bidirectional inverter (20) from the public grid (14), having a control device (50) and an activation device (51) having an auxiliary battery (52), and
- at least one interface (44) for a supply voltage of the backup device (24) and at least one interface (26) for a control line (27) of a battery (22), which has, in addition to two battery poles for a connection to a supply interface (28) of the bidirectional inverter (20), at least one control line (27), the supply with voltage of which causes the battery (22) to be put into operation, wherein
- the activation device (51) is configured so as, when the activation device (51) is operated in the event of a black start, to provide on the at least one interface (26) for the control line (27) of the battery (22) a voltage, provided by the auxiliary battery (52), that is suitable for starting up the battery (22).

13. The backup device (24) as claimed in claim 12, wherein the backup device (24) is configured so that, from a shut-down state or standby mode, when
- the interface (44) for the supply voltage has a supply voltage applied to it or
- the interface (44) for the supply voltage has a supply voltage applied to it and additionally an interface (42) for a control line (37) of the backup device (24) has an enabling signal applied to it,
- the backup device (24) switches to an operating state different from the shut-down state or the standby mode, wherein optionally
- at least one further interface (44) for a supply voltage of the backup device (24) or
- at least one further interface (44) for a supply voltage of the backup device (24) and at least one further interface (42) for a control line (37) of the backup device (24) is comprised.

14. A power supply device (18) having
- at least one bidirectional inverter (20) having an AC-side interface (25) for connecting a grid (6),
- at least one battery (22) connected to the DC side of the bidirectional inverter (20), which has, in addition to two battery poles for a connection to a supply interface (28) of the bidirectional inverter (20), at least one control line (27), the supply with voltage of which causes the battery (22) to be put into operation, and
- at least one activation device (51) having an auxiliary battery (52), wherein
- the bidirectional inverter (20) comprises interfaces for connecting the battery (22) on the DC side, wherein at least one supply interface (28) is arranged for connecting two battery poles of the battery (22) to the bidirectional inverter (20), and
- the activation device (51) is configured so as, when the activation device (51) is operated in the event of a black start, to provide on an interface (26) for a control line (27) of at least one battery (22) a voltage, provided by the auxiliary battery (52), that is suitable for setting up the battery (22).

15. The power supply device (18) as claimed in claim 14, wherein at least one bidirectional inverter (20) is embodied according to one of claims 7 to 11 and/or has a backup device (24) that is embodied according to one of claims 12 or 13.

## Revendications

1. Procédé de démarrage au noir d'un dispositif d'alimentation en énergie (18), le dispositif d'alimentation en énergie (18) comportant au moins un onduleur bidirectionnel (20) avec un raccordement (25) côté CA pour un réseau (6) et une batterie (22) raccordée côté CC à l'onduleur bidirectionnel (20), laquelle présente, outre deux pôles de batterie pour le raccordement à une interface d'alimentation (28) de l'onduleur bidirectionnel (20), au moins une ligne de commande (27), dont l'alimentation en tension provoque une mise en service de la batterie (22), ainsi qu'un dispositif d'activation (51) qui est conçu pour fournir, lors d'un actionnement du dispositif d'activation (51) lors d'un démarrage au noir sur une interface (26) pour la ligne de commande (27), une tension fournie par une batterie auxiliaire (52) qui est appropriée pour une mise en service de la batterie (22), dans lequel
- dans une étape de procédé, le dispositif d'activation (51) du dispositif d'alimentation en énergie (18) est actionné de telle sorte que le dispositif d'activation applique une tension électrique à la ligne de commande (27) de la batterie (22), de sorte que la batterie (22) est mise dans un état de fonctionnement qui est différent d'un état coupé ou d'un mode d'attente, la tension fournie par le dispositif d'activation (51) étant fournie par la batterie auxiliaire (52), et
- dans une autre étape du procédé, après l'alimentation de la ligne de commande (27) par la tension fournie par la batterie auxiliaire (52), l'onduleur bidirectionnel (20) est mis dans un état de fonctionnement qui est différent d'un état coupé ou d'un mode d'attente.

2. Procédé selon la revendication 1, dans lequel
- dans l'autre étape du procédé, la batterie (22) mise dans l'état de fonctionnement par le dispositif d'activation (51) fournit une tension d'alimentation CC à l'onduleur bidirectionnel (20) qui met l'onduleur bidirectionnel (20) dans un état de fonctionnement qui est différent d'un état coupé ou d'un mode d'attente.

3. Procédé selon l'une des revendications 1 ou 2, dans lequel le dispositif d'alimentation en énergie (18) comporte un dispositif de secours séparé ou compris dans l'onduleur bidirectionnel (20), qui est conçu pour détecter une défaillance d'un réseau public (14) et pour séparer du réseau public (14) un réseau local (12) raccordé côté CA à l'onduleur bidirectionnel (20), et dans lequel, dans le cas d'un dispositif de secours (24) séparé, celui-ci est alimenté en plus, notamment par l'onduleur bidirectionnel (20), avec une tension d'alimentation et est mis dans un état de fonctionnement qui est différent d'un état coupé ou d'un mode d'attente.

4. Procédé selon l'une des revendications 1 à 3, dans lequel l'onduleur bidirectionnel (20), en état de fonctionnement, prend en charge, sur une ligne de commande (27) de la batterie (22), la mise à disposition de la tension initialement fournie par le dispositif d'activation (51) et le dispositif d'activation (51) est placé, par rapport à la batterie (22), dans un état initial dans lequel un nouveau démarrage au noir peut être lancé par un actionnement du dispositif d'activation (51).

5. Procédé selon l'une des revendications précédentes 1 à 4, dans lequel le dispositif d'alimentation en énergie (18) comprend des batteries supplémentaires raccordées à l'onduleur bidirectionnel (20), qui présentent chacune, outre deux pôles de batterie pour le raccordement à une interface d'alimentation (28) de l'onduleur bidirectionnel (20), au moins une ligne de commande (27) dont l'alimentation en tension provoque une mise en service de la batterie (22), une tension étant fournie à chacune des batteries supplémentaires sur la ligne de commande (27), qui mettent les autres batteries dans un état de fonctionnement qui est différent d'un état d'attente ou d'un mode d'attente, la tension étant fournie par le dispositif d'activation (51) et/ou l'onduleur bidirectionnel (20), et les autres batteries mettant chacune à l'état de fonctionnement une tension d'alimentation CC à la disposition de l'onduleur bidirectionnel (20) et un protocole de prise de contact étant respectivement lancé entre l'autre batterie et l'onduleur bidirectionnel (20) pour établir une communication entre les deux.

6. Procédé selon l'une des revendications précédentes 1 à 5, dans lequel le dispositif d'alimentation en énergie (18) comprend d'autres onduleurs bidirectionnels avec chacun au moins une batterie (22) raccordée à l'autre onduleur bidirectionnel, et on fournit à chaque fois à au moins une batterie raccordée (22) des autres onduleurs bidirectionnels une tension sur une ligne de commande (27), qui place la batterie connectée (22) dans un état de fonctionnement différent d'un état coupé ou d'un mode d'attente, la tension étant fournie par le dispositif d'activation (51) ou l'onduleur bidirectionnel (20) ou un dispositif de secours séparé (24) placé par l'onduleur bidirectionnel (20) dans un état de fonctionnement différent d'un état coupé ou d'un mode d'attente.

7. Onduleur bidirectionnel (20) comprenant
- un dispositif de commande (50) et des interfaces pour le raccordement côté CC d'une batterie (22) qui présente, outre deux pôles de batterie pour le raccordement à une interface d'alimentation (28) de l'onduleur bidirectionnel (20), au moins une ligne de commande (27) dont l'alimentation avec une tension provoque une mise en service de la batterie (22), et pour le raccordement côté CA d'un réseau (6), au moins une interface d'alimentation (28) étant disposée pour le raccordement des deux pôles de batterie de la batterie à l'onduleur bidirectionnel (20), et
- une interface (26) pour la ligne de commande (27) de la batterie (22), et
- un dispositif d'activation (51) avec une batterie auxiliaire (52), dans lequel
- le dispositif d'activation (51) est conçu pour fournir, lors d'un actionnement du dispositif d'activation lors d'un démarrage au noir à l'interface (26) pour la ligne de commande (27), une tension fournie par la batterie auxiliaire (52) qui est appropriée pour une mise en service de la batterie (22).

8. Onduleur bidirectionnel (4, 20) selon la revendication 7, dans lequel l'onduleur bidirectionnel (20) peut être mis dans un état de fonctionnement différent d'un état coupé ou d'un mode d'attente lors d'un démarrage au noir par la batterie (22), notamment en appliquant à l'interface d'alimentation (28) une tension d'alimentation continue fournie par la batterie (22) et adaptée pour mettre l'onduleur bidirectionnel (20) dans un état de fonctionnement différent d'un état coupé ou d'un mode d'attente.

9. Onduleur bidirectionnel (20) selon l'une des revendications 7 ou 8, dans lequel le dispositif de commande (50) est conçu pour prendre en charge, lors d'un démarrage au noir après la mise en service de l'onduleur bidirectionnel (20), la fourniture d'une tension pour maintenir l'état de fonctionnement de la batterie (22), et dans lequel le dispositif de commande (50) est optionnellement conçu pour placer, après la prise en charge, le dispositif d'activation (51) relatif à la batterie (22) dans un état initial dans lequel un nouveau démarrage au noir peut être lancé par un actionnement du dispositif d'activation (51).

10. Onduleur bidirectionnel (20) selon l'une des revendications 7 à 9, dans lequel l'onduleur bidirectionnel (20) comprend des interfaces de raccordement de plusieurs batteries (22) qui présentent chacune, outre deux pôles de batterie destinés à être raccordés à une interface d'alimentation (28) de l'onduleur bidirectionnel (20), au moins une ligne de commande (27), dont l'alimentation en tension provoque une mise en service de la batterie (22), le dispositif d'activation (51) étant conçu et pouvant être actionné de telle sorte que, lors d'un démarrage au noir aux interfaces (26), le dispositif d'activation (51) met à disposition pour les lignes de commande (27) des tensions fournies par la batterie auxiliaire (52), lesquelles sont appropriées pour une mise en service des batteries (22), et
- le dispositif de commande (50) est conçu pour prendre en charge, lors d'un démarrage au noir après une mise en service de l'onduleur bidirectionnel (20), la mise à disposition des tensions pour le maintien de l'état de fonctionnement des batteries (22) et pour mettre le dispositif d'activation (51) dans un état initial en ce qui concerne les batteries (22), dans lequel un nouveau démarrage au noir peut être lancé par un actionnement du dispositif d'activation (51).

11. Onduleur bidirectionnel (20) selon l'une quelconque des revendications 7 à 10, dans lequel l'onduleur bidirectionnel (20) comprend un dispositif de secours interne (24) ou un raccordement pour un dispositif de secours séparé (24) qui est configuré pour détecter une défaillance d'un réseau public (14) et pour séparer un réseau local (12) raccordé côté CA à l'onduleur bidirectionnel (20) du réseau public (14), dans lequel le raccordement comprend au moins une interface d'alimentation (38), dans lequel, dans le cas d'un dispositif de secours séparé (24), le dispositif de commande (50) est conçu pour fournir une tension d'alimentation à l'interface d'alimentation (38) lors d'un démarrage au noir après la mise en service de l'onduleur bidirectionnel (20) et pour mettre le dispositif de secours séparé (24) dans un état de fonctionnement qui est différent d'un état coupé ou d'un mode d'attente.

12. Dispositif de secours (24), qui est conçu pour détecter une défaillance d'un réseau public (14) et pour séparer du réseau public (14) un réseau local (12) raccordé côté CA à un onduleur bidirectionnel (20), avec un dispositif de commande (50) et un dispositif d'activation (51) avec une batterie auxiliaire (52), et
- au moins une interface (44) pour une tension d'alimentation du dispositif de secours (24) et au moins une interface (26) pour une ligne de commande (27) d'une batterie (22), qui présente, outre deux pôles de batterie pour le raccordement à une interface d'alimentation (28) de l'onduleur bidirectionnel (20), au moins une ligne de commande (27), dont l'alimentation en tension provoque une mise en service de la batterie (22), dans lequel
- le dispositif d'activation (51) est conçu pour fournir, lors d'un actionnement du dispositif d'activation (51) lors d'un démarrage au noir sur l'au moins une interface (26) pour la ligne de commande (27) de la batterie (22), une tension fournie par la batterie auxiliaire (52) qui est appropriée pour une mise en service de la batterie (22).

13. Dispositif de secours (24) selon la revendication 12, dans lequel le dispositif de secours (24) est agencé de telle sorte qu'à partir d'un état coupé ou d'un mode d'attente, en cas de
- une alimentation de l'interface (44) pour la tension d'alimentation avec une tension d'alimentation ou
- une alimentation de l'interface (44) pour la tension d'alimentation avec une tension d'alimentation et en plus une alimentation d'une interface (42) pour une ligne de commande (37) du dispositif de secours (24) avec un signal de libération
- le dispositif de secours (24) passe dans un état de fonctionnement différent de l'état coupé ou du mode d'attente, dans lequel, en option
- au moins une autre interface (44) pour une tension d'alimentation du dispositif de secours (24) ou
- au moins une autre interface (44) pour une tension d'alimentation du dispositif de secours (24) et au moins une autre interface (42) pour une ligne de commande (37) du dispositif de secours (24) sont comprises.

14. Dispositif d'alimentation en énergie (18) comprenant
- au moins un onduleur bidirectionnel (20) avec une interface (25) côté AC pour le raccordement d'un réseau (6),
- au moins une batterie (22) raccordée côté CC à l'onduleur bidirectionnel (20), qui présente, outre deux pôles de batterie pour le raccordement à une interface d'alimentation (28) de l'onduleur bidirectionnel (20), au moins une ligne de commande (27) dont l'application d'une tension provoque une mise en service de la batterie (22), et
- au moins un dispositif d'activation (51) avec une batterie auxiliaire (52), dans lequel
- l'onduleur bidirectionnel (20) comprend des interfaces pour le raccordement côté CC de la batterie (22), au moins une interface d'alimentation (28) étant disposée pour le raccordement de deux pôles de la batterie (22) à l'onduleur bidirectionnel (20), et
- le dispositif d'activation (51) est conçu pour fournir, lors d'un actionnement du dispositif d'activation (51) lors d'un démarrage au noir sur une interface (26) pour une ligne de commande (27) d'au moins une batterie (22), une tension fournie par la batterie auxiliaire (52) qui est appropriée pour une mise en service de la batterie (22).

15. Dispositif d'alimentation en énergie (18) selon la revendication 14, dans lequel au moins un onduleur bidirectionnel (20) est configuré selon l'une des revendications 7 à 11 et/ou comporte un dispositif de secours (24) configuré selon l'une des revendications 12 ou 13.
